**Europäisches Patentamt**

**European Patent Office**

**Office européen des brevets**

(19)

(11) Veröffentlichungsnummer: **0 220 336**
**B1**

(12) # EUROPÄISCHE PATENTSCHRIFT

(45) Veröffentlichungstag der Patentschrift:
**11.01.89**

(21) Anmeldenummer: **85113812.3**

(22) Anmeldetag: **30.10.85**

(51) Int. Cl.⁴: **F16L 13/02**

(54) **Verfahren zum Verbinden von Rohrenden einer Gasleitung.**

(43) Veröffentlichungstag der Anmeldung:
**06.05.87 Patentblatt 87/19**

(45) Bekanntmachung des Hinweises auf die Patenterteilung:
**11.01.89 Patentblatt 89/2**

(84) Benannte Vertragsstaaten:
**AT BE CH DE FR GB IT LI LU NL SE**

(56) Entgegenhaltungen:
**EP-A- 0 125 896**
**DE-A- 2 014 705**
**US-A- 3 971 579**

(73) Patentinhaber: **MANIBS R. Mannesmann GmbH & ibs Nagel GmbH & Co. KG., Lempstrasse 24, D-5630 Remscheid-Bliedinghausen(DE)**

(72) Erfinder: **Servé, Klaus, Ing., Elberfelder Strasse 39, D-5608 Radevormwald(DE)**

(74) Vertreter: **Mentzel, Norbert, Dipl.-Phys. et al, Patentanwälte Dipl.-Phys. Buse Dipl.-Phys. Mentzel Dipl.-Ing. Ludewig Unterdörnen 114, D-5600 Wuppertal 2(DE)**

## Beschreibung

Die Erfindung betrifft ein Verfahren zum Verbinden von Rohrenden einer bereits benutzten Gasleitung mit einer verschweißbaren Muffe, wobei die Muffe auf die miteinander zu verbindenden Gasrohrenden aufgeschoben und beidendig jeweils das Muffenstirnende bei unter Druck stehender Gasleitung mit der äußeren Mantelfläche des eingeschobenen Gasrohrendes gasdicht mit umlaufender Schweißnaht verbunden wird und beidendig der Ringspalt zwischen der inneren Mantelfläche der Verbindungsmuffe und der äußeren Mantelfläche des eingeschobenen Gasrohrendes jeweils mit einer Dichtung abgedichtet wird, wobei die Dichtung von einem vor dem Aufschieben der Verbindungsmuffe auf die zu verbindenden Gasrohrenden in eine umlaufende Ringnut in der inneren Mantelfläche der Verbindungsmuffe abdichtend einsetzbaren Dichtungsring aus weichelastischem Material, wie Gummi, Kunststoff od. dgl. gebildet ist und kraftschlüssig gegen die äußere Mantelfläche des eingeschobenen Gasrohrendes anliegt.

Bei diesem, aus der DE-A 3 423 952 bekannten Verfahren weist der Dichtungsring aus weichelastischem Material, wie Gummi, Kunststoff od. dgl., zwei etwa parallel zueinander und etwa parallel zur äußeren Mantelfläche des eingeschobenen Gasrohrendes verlaufende Dichtungslippen auf, wobei die innere Dichtungslippe vom Druck der Gasleitung beaufschlagt gegen die äußere Mantelfläche des eingeschobenen Gasrohrendes und die äußere Dichtungslippe vom Druck der Gasleitung beaufschlagt gegen die Bodenfläche der umlaufenden, in der inneren Mantelfläche der Verbindungsmuffe vorgesehenen Ringnut anliegt. Der Dichtungsring wird somit in einfacher Weise vor dem Aufsetzen der Verbindungsmuffe auf die zu verbindenden Gasrohrenden in eine innenseitige Nut der Verbindungsmuffe eingesetzt. Die Verbindungsmuffe kann trotz der eingesetzten Dichtungsringe auf den zu verbindenden Gasrohrenden verschoben werden, bis die bestimmungsgemäße Lage erzielt und die Schweißnähte angebracht werden können. Vor dem Anbringen der Schweißnähte wird die Gasleitung unter Druck gesetzt. Dabei wird mit den Dichtungsringen eine zuverlässige Abdichtung erzielt, da jeder Dichtungsring zwei Dichtungslippen aufweist, die einerseits gegen die äußere Mantelfläche des eingeschobenen Gasrohrendes und andererseits die Bodenflächen der umlaufenden Ringnuten der Verbindungsmuffen anliegen. Der in der Gasleitung herrschende Gasdruck wirkt dabei auf die äußere Mantelfläche der inneren Dichtungslippe, so daß diese fest gegen die äußere Mantelfläche des eingeschobenen Gasrohrendes gedrückt wird. Außerdem wirkt der Gasdruck auf die innere Mantelfläche der äußeren Dichtungslippe, so daß diese zuverlässig gegen die Bodenfläche der umlaufenden Ringnut der Verbindungsmuffe angedrückt wird. Nach dem Unterdrucksetzen der Gasleitung wird somit eine zuverlässige Abdichtung erzielt, so daß die Schweißnähte in einfacher Weise angebracht werden können. Die Dichtungsringe müssen dabei jedoch dem äußeren Durchmesser der eingeschobenen Gasrohrenden angepaßt sein, um eine zuverlässige Abdichtung zu erzielen. Die Vorspannung, mit der die Dichtungslippen gegen die äußeren Mantelflächen der eingeschobenen Gasrohrenden anliegen, darf dabei nicht zu groß sein, um ein Einschieben der Gasrohrenden in die Dichtungsringe zu ermöglichen. Abhängig von der Vorspannung verschlechtert sich somit die Einführbarkeit des Gasrohrendes in den Dichtungsring bei besserwerdender Abdichtung und bei besserwerdender Einführbarkeit verschlechtert sich die Abdichtung.

Der Erfindung liegt die Aufgabe zu Grunde, ein Verfahren zum Verbinden von Rohrenden einer bereits benutzten Gasleitung der eingangs erläuterten Art zu schaffen, bei der eine zuverlässige Abdichtung mit dem Dichtungsring auch bei unterschiedlichem Außendurchmesser der eingeschobenen Gasrohrenden erzielt wird, ohne die Einführbarkeit der Gasrohrenden in die Verbindungsmuffe und deren Abdichtungen zu beeinträchtigen.

Diese Aufgabe ist erfindungsgemäß dadurch gelöst, daß der einen größeren Innendurchmesser als der Außendurchmesser des eingeschobenen Gasrohrendes aufweisende Dichtungsring während des Schweißvorganges mit einem zwischen der äußeren Mantelfläche des Dichtungsringes und der Bodenfläche der umlaufenden, in der inneren Mantelfläche der Verbindungsmuffe vorgesehenen Ringnut eindrückbaren Medium radial gegen die äußere Mantelfläche des eingeschobenen Gasrohrendes gasdicht gepreßt wird. Durch dieses gasdichte Anpressen des Dichtungsringes während des Schweißvorganges mit einem unter Druck stehenden Medium gegen die äußere Mantelfläche des eingeschobenen Gasrohrendes wird eine zuverlässige Abdichtung erzielt, wobei sich der Dichtungsring, der aus elastischem Material besteht, auch unterschiedlichen Außendurchmessern des eingeschobenen Gasrohrendes innerhalb gewisser Grenzen anpassen kann. Vor dem Anpressen des Dichtungsringes gegen die äußere Mantelfläche des eingeschobenen Gasrohrendes ist der Innendurchmesser des Dichtungsringes wesentlich grösser als der Außendurchmesser des eingeschobenen Gasrohrendes, so daß das Gasrohrende in besonders einfacher Weise in die Verbindungsmuffe eingeschoben werden kann.

Aus der EP-A 0 125 896 ist bereits ein Dichtungsring bekanntgeworden, der in einer umlaufenden Nut in der Innenwand eines rohrförmigen Teiles eingesetzt ist und mit einem unter Druck stehenden Medium gegen die Außenwand eines eingeschobenen Teiles preßbar ist. Hierbei handelt es sich jedoch um die Abdichtung einer drehbaren Welle. Ein Schweißen ist beim Abdichten der drehbaren Welle nicht vorgesehen.

Der Dichtungsring kann bereits vor dem Einlassen des unter Druck stehenden Gases in die Gasrohrleitung gasdicht gegen die äußere Mantelfläche des eingeschobenen Gasrohrendes gepreßt werden. Vor dem Einlassen des unter Druck stehenden Gases wird somit in einfacher Weise bereits eine zuverlässige Abdichtung der miteinander zu verbindenden Gasrohrenden innerhalb der Verbindungsmuffe erzielt, so daß dann anschließend die

freien Stirnenden der Verbindungsmuffe mit der äußeren Mantelfläche der Gasrohrenden verschweißt werden können.

Das zwischen der äußeren Mantelfläche des während des Schweißvorganges gegen die äußere Mantelfläche des eingeschobenen Gasrohrendes preßbaren Dichtungsringes und der Bodenfläche der Ringnut eingedrückte Medium kann mit einem Druck versehen werden, der etwa 3 bar über dem im Gasrohr herrschenden Gasdruck liegt. Dadurch wird in einfacher Weise erreicht, daß der unter dem Druck des Mediums stehende Dichtungsring das eingeschobene Gasrohrende derart festklemmt, daß das eingeschobene Gasrohrende nicht durch den im Gasrohr herrschenden Gasdruck aus der Verbindungsmuffe herausgedrückt werden kann. Der im Gasrohr herrschende Gasdruck wirkt dabei rechtwinklig zur Wirkung des auf den Dichtungsring einwirkenden Mediums auf den Dichtungsring, so daß der Dichtungsring nicht von dem im Gasrohr herrschenden Gasdruck von der äußeren Mantelfläche des eingeschobenen Gasrohrendes abgedrückt werden kann.

Der Dichtungsring kann an seinen beiden Stirnenden mit umlaufenden Dichtungslippen versehen sein, die gegen die Seitenflächen der Ringnut anliegen. Diese Dichtungslippen werden von dem Druck des Mediums gegen die Seitenflächen der Ringnut gedrückt, so daß eine zuverlässige Abdichtung des Dichtungsringes gegenüber der aufgeschobenen Verbindungsmuffe erzielt wird.

An jeder Stirnfläche des Dichtungsringes können je zwei Dichtungslippen vorgesehen sein. Mit dieser doppelten Abdichtung des Dichtungsringes gegenüber den Seitenflächen der umlaufenden Ringnut der Verbindungsmuffe wird eine zuverlässige Abdichtung erzielt, wobei der Dichtungsring auch noch in einfacher Weise in der Ringnut geführt ist zum Anpressen gegen die äußere Mantelfläche des eingeschobenen Gasrohrendes.

Die radial innere Mantelfläche des Dichtungsringes kann konvex bzw. konkav gewölbt sein. Dadurch wird eine zuverlässige Abdichtung gegen die äußere Mantelfläche des eingeschobenen Gasrohrendes erzielt.

Die Dichtung kann im Bereich eines Ringwulstes der Verbindungsmuffe angeordnet sein. Dadurch wird in einfacher Weise eine wohlfeile Fertigung der Verbindungsmuffe erzielt, da sie dünnwandig herstellbar und somit wenig Material erfordert und trotzdem jeweils im Bereich der umlaufenden Ringwulst den Raum für eine verhältnismäßig tiefe Ringnut schafft für die Aufnahme des Dichtungsringes.

Auf der Zeichnung ist die Erfindung in einem Ausführungsspiel dargestellt, und zwar zeigen:

Fig. 1 eine mit der erfindungsgemäßen Verbindungsmuffe versehene Gasleitung in Seitenansicht, teilweise weggebrochen,

Fig. 2 einen Schnitt nach der Linie II–II der Fig. 1 und

Fig. 3 einen der Fig. 2 entsprechenden Schnitt durch die Verbindungsmuffe, wobei der Dichtungsring in der Preßstellung dargestellt ist.

Die auf der Zeichnung dargestellte Verbindungsmuffe 10 dient zum Verbinden der beiden Rohrenden 11 einer Gasleitung. Die Verbindungsmuffe 10 ist dabei auf die miteinander zu verbindenden Gasrohrenden 11 aufschiebbar und beidendig jeweils das Muffenstirnende 12 mit einer bei unter Druck stehender Gasleitung anzubringender Schweißnaht 13 mit der äußeren Mantelfläche 14 des eingeschobenen Gasrohrendes 11 gasdicht verbindbar.

Um die Gasleitung vor dem Schweißen unter Druck setzen zu können, ist der Ringspalt 15 zwischen der inneren Mantelfläche 16 der Verbindungsmuffe 10 und der äußeren Mantelfläche14 des eingeschobenen Gasrohrendes 11 beidendig mit je einem Dichtungsring 17 abdichtbar. Der Dichtungsring 17 ist dabei in einer umlaufenden Ringnut 18 in der inneren Mantelfläche 16 der Verbindungsmuffe 10 eingebracht.

Der Dichtungsring 17 besteht aus weichelastischem Material, wie Gummi, Kunststoff od. dgl. und weist an seinen beiden Stirnflächen je zwei umlaufende Dichtungslippen 19,20 für die dichte Anlage gegen die Seitenflächen 21 der umlaufenden, in der inneren Mantelfläche 16 der Verbindungsmuffe 10 vorgesehenen Ringnut 18 auf.

Die gegen die äußere Mantelfläche 14 des eingeschobenen Gasrohrendes 11 preßbare innere Mantelfläche 22 des Dichtungsringes 17 ist dabei konvex gewölbt. Die gegen die Bodenfläche 23 der umlaufenden, in der inneren Mantelfläche 16 der Verbindungsmuffe 10 vorgesehenen Ringnut 18 gerichtete äußere Mantelfläche 24 des Dichtungsringes 17 ist konkav gewölbt.

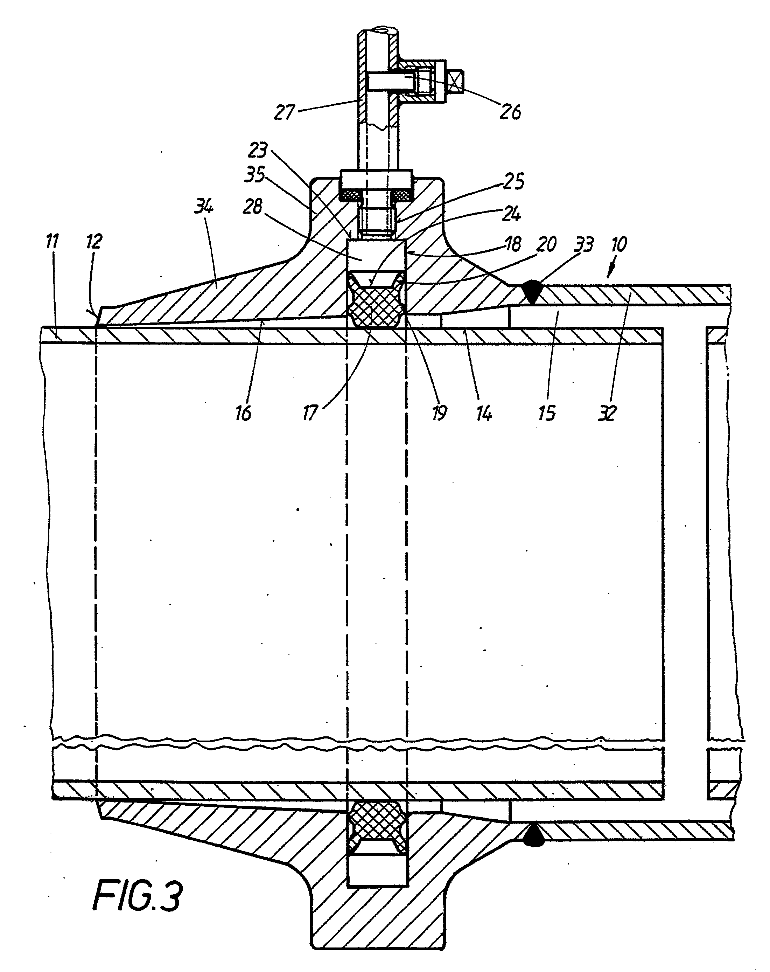

Wie insbesondere aus der Fig. 3 ersichtlich, ist der in der inneren Mantelfläche 16 der Verbindungsmuffe 10 vorgesehenen Ringnut 18 ein in die Bodenfläche 23 der Ringnut 18 mündender Durchbruch 25 zugeordnet. Der Durchbruch 25 weist ein nicht näher bezeichnetes Innengewinde auf und dient zur Anbringung einer mit einem Absperrhahn 26 versehenen Anschlußleitung 27 für die Einbringung eines unter Druck stehenden Mediums. Als Medium kann dabei Stickstoff, Wasser oder Fett benutzt werden.

Beim bestimmungsgemäßen Gebrauch der Verbindungsmuffe 10 wird diese auf die zu verbindenden Rohrenden 11 aufgeschoben, wobei zuvor die Dichtungsringe 17 in den innenseitigen Ringnuten 18 der Verbindungsmuffe 10 eingebracht worden sind. Durch Einbringen des unter Druck stehenden Mediums in den Raum 28 zwischen der äußeren Mantelfläche 24 des Dichtungsringes 17 und der Bodenfläche 23 der Ringnut 18 wird der Dichtungsring 17 gegen die äußere Mantelfläche 14 des eingeschobenen Gasrohrendes 11 gepreßt. Die Dichtungslippen 19 und 20 des Dichtungsringes17 liegen dabei dicht gegen die Seitenflächen 21 der Ringnut 18 an. Der Ringspalt 15 zwischen der äußeren Mantelfläche 14 des eingeschobenen Gasrohrendes 11 und der inneren Mantelfläche 16 der Verbindungsmuffe 10 ist somit in einfacher Weise gasdicht abgeschlossen, so daß mit den Schweißnähten 13 die freien Stirnenden 12 der Verbindungsmuffe 10 mit der äußeren Mantelfläche 14 der eingeschobenen Gasrohrenden 11 verbunden werden können.

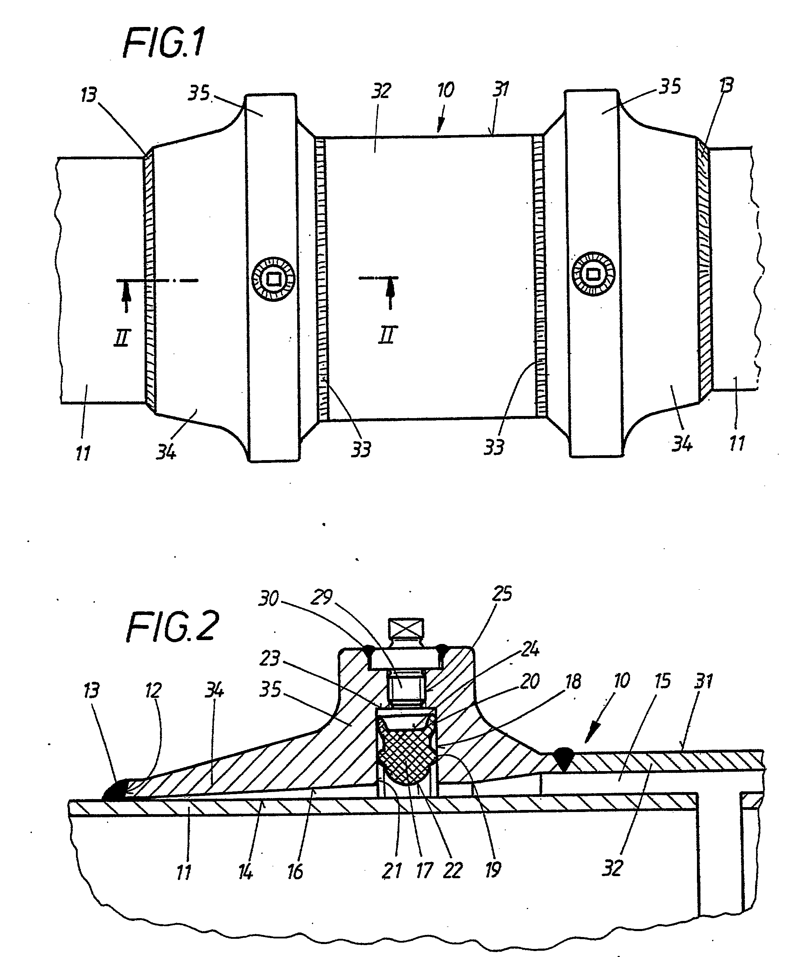

Damit während des Anbringens der Schweißnähte 13 der Dichtungsring 17 weiter mit dem entsprechenden Druck gegen die äußere Mantelfläche 14 des eingeschobenen Gasrohrendes 11 gepreßt wird, ist das auf den Dichtungsring 17 einwirkende Medium unter einem konstanten Druck zu halten. Hierzu wird nach dem Einbringen des unter Druck stehenden Mediums der Absperrhahn 26 in die Schließstellung überführt. Nach dem Anbringen der Schweißnähte 13 kann der Absperrhahn 26 wieder geöffnet werden, so daß sich das Medium entspannt und der Dichtungsring 17 entlastet wird. Nach dem Abschrauben der Anschlußleitung 27 kann in das nicht näher bezeichnete Innengewinde des Durchbruches 25 ein Stopfen 29 eingeschraubt werden. Nach dem Einschrauben des Stopfens 29 wird die Trennfuge zwischen dem Stopfen und dem Durchbruch 25 außenseitig mit einer Schweißnaht 30 gasdicht verschlossen, so daß ein dauerhafter Anschluß erzielt ist. Der eingeschraubte verschweißte Stopfen 29 ist dabei in den Fig. 1 und 2 dargestellt.

Damit die Dichtungsringe 17 beim bestimmungsgemäßen Gebrauch nicht von dem im Gasrohr herrschenden Gasdruck von der äußeren Mantelfläche der eingeschobenen Gasrohrenden 11 abgedrückt werden, ist es zweckmäßig, daß das zwischen der äußeren Mantelfläche 24 des Dichtungsringes 17 und der Bodenfläche 25 der Ringnut 18 eindrückbaren Medium unter einem Druck steht, der etwas höher liegt, als der im Gasrohr herrschende Gasdruck. Es reicht dabei aus, daß das Medium unter einem Druck steht, der etwa 3 bar über dem in Gasrohr herrschenden Gasdruck liegt.

Die beiden in der inneren Mantelfläche 16 vorgesehenen Ringnuten 18 der Verbindungsmuffe 10 sind jeweils im Bereich von aus der äußeren Mantelfläche 31 vorstehenden Ringwülsten 35 der an sich dünnwandigen Verbindungsmuffe 10 vorgesehen. Die Verbindungsmuffe 10 besteht dabei in einfacher Weise aus einem den mittleren Teil bildenden Rohrteil 32, an dem mit Schweißnähten 33 rohrförmige Formteile 34 verbunden sind. Die Formteile 34 können dabei in einfacher Weise die Ringwülste 35 mit den darin innenseitig vorgesehenen Ringnuten 18 aufweisen.

Bezugszeichenliste :

10 Verbindungsmuffe
11 Rohrende
12 Muffenstirnende
13 Schweißnaht
14 äußere Mantelfläche von 11
15 Ringspalt
16 innere Mantelfläche von 10
17 Dichtungsring
18 Ringnut
19 innere Dichtungslippe
20 äußere Dichtungslippe
21 Seitenflächen von 18
22 innere Mantelfläche von 17
23 Bodenfläche von 18
24 äußere Mantelfläche von 17
25 Durchbruch nach 18
26 Absperrhahn
27 Anschlußleitung
28 Raum zwischen 24 und 23
29 Stopfen
30 Schweißnaht
31 äußere Mantelfläche von 10
32 Rohrteil von 10
33 Schweißnähte
34 Formteile
35 Ringwulst

**Patentansprüche**

1. Verfahren zum Verbinden von Rohrenden (11) einer bereits benutzten Gasleitung mit einer verschweißbaren Muffe (10), wobei die Muffe (10) auf die miteinander zu verbindenden Gasrohrenden (11) aufgeschoben und beidendig jeweils das Muffenstirnende (12) bei unter Druck stehender Gasleitung mit der äußeren Mantelfläche (14) des eingeschobenen Gasrohrendes (11) gasdicht mit umlaufender Schweißnaht (13) verbunden wird und beidendig der Ringspalt (15) zwischen der inneren Mantelfläche (16) der Verbindungsmuffe (10) und der äußeren Mantelfläche (14) des eingeschobenen Gasrohrendes (11) jeweils mit einer Dichtung (17) abgedichtet wird, wobei die Dichtung (17) von einem vor dem Aufschieben der Verbindungsmuffe (10) auf die zu verbindenden Gasrohrenden (11) in eine umlaufende Ringnut (18) in der inneren Mantelfläche (16) der Verbindungsmuffe (10) abdichtend einsetzbaren Dichtungsring (17) aus weichelastischem Material, wie Gummi, Kunststoff od. dgl. gebildet ist und kraftschlüssig gegen die äußere Mantelfläche (14) des eingeschobenen Gasrohrendes (11) anliegt, dadurch gekennzeichnet, daß der einen größeren Innendurchmesser als der Außendurchmesser des eingeschobenen Gasrohrendes (11) aufweisende Dichtungsring (17) während des Schweißvorganges mit einem zwischen der äußeren Mantelfläche (24) des Dichtungsringes (17) und der Bodenfläche (25) der umlaufenden, in der inneren Mantelfläche (16) der Verbindungsmuffe (10) vorgesehenen Ringnut (18) eindrückbaren Medium radial gegen die äußere Mantelfläche (14) des eingeschobenen Gasrohrendes (11) gasdicht gepreß wird.

2. Verfahren nach Anspruch 1, dadurch gekennzeichnet, daß der Dichtungsring (17) bereits vor dem Einlassen des unter Druck stehenden Gases in die Gasrohrleitung (11) gasdicht gegen die äußere Mantelfläche (14) des eingeschobenen Gasrohrendes (11) gepreßt wird.

3. Verfahren nach Anspruch 1 oder 2, dadurch gekennzeichnet, daß das zwischen der äußeren Mantelfläche (24) des während des Schweißvorganges gegen die äußere Mantelfläche (14) des eingeschobenen Gasrohrendes (11) preßbaren Dichtungsringes (17) und der Bodenfläche (25) der Ringnut (18) eingedrückte Medium mit einem Druck versehen wird, der etwa 3 bar über dem im Gasrohr herrschenden Gasdruck liegt.

4. Verfahren nach einem der Ansprüche 1 bis 3, dadurch gekennzeichnet, daß der Dichtungsring (17) an seinen beiden Stirnenden mit umlaufenden Dichtungslippen (19, 20) versehen ist, die gegen die Seitenflächen (21) der Ringnut (18) anliegen.

5. Verfahren nach Anspruch 4, dadurch gekennzeichnet, daß an jeder Stirnfläche der Dichtungsring je zwei Dichtungslippen (19, 20) vorgesehen sind.

6. Verfahren nach Anspruch 4 oder 5, dadurch gekennzeichnet, daß die radial innere Mantelfläche (22) des Dichtungsringes (17) konvex bzw. konkav gewölbt ist.

7. Verfahren nach einem der Ansprüche 4 bis 6, dadurch gekennzeichnet, daß der Dichtungsring im Bereich eines Ringwulstes (35) der Verbindungsmuffe (10) angeordnet ist.

## Claims

1. A process for connecting pipe ends (11) of a gas line which is already in use, comprising a weldable sleeve (10), wherein the sleeve (10) is pushed on to the gas pipe ends (11) which are to be connected together, and at each of the two ends, the respective end (12) of the sleeve, with the gas line under pressure, is gas-tightly joined to the outer peripheral surface (14) of the inserted end (11) of the gas pipe, with a weld seam (13) extending therearound, and at both ends the annular gap (15) between the inner peripheral surface (16) of the connecting sleeve (10) and the outer peripheral surface (14) of the inserted end (11) of the gas pipe is respectively sealed with a sealing means (17), wherein the sealing means (17) is formed by a sealing ring (17) of soft-elastic material such as rubber, plastics material or the like, which can be sealingly fitted into a annular groove (18) extending around the connecting sleeve (10) in the inner peripheral surface (16) thereof prior to the connecting sleeve (10) being pushed on to the ends (11) of the gas pipe to be connected, and the sealing means (17) bears force-lockingly against the outer peripheral surface (14) of the inserted end (11) of the gas pipe, characterised in that, during the welding operation, the sealing ring (17) which is of a larger inside diameter than the outside diameter of the inserted end (11) of the gas pipe is gas-tightly pressed radially against the outer peripheral surface (14) of the inserted end (11) of the gas pipe, with a medium which can be forced in between the outer peripheral surface (24) of the sealing ring (17) and the bottom surface (25) of the peripherally extending annular groove (18) provided in the inner peripheral surface (16) of the connecting sleeve (10).

2. A process according to claim 1 characterised in that the sealing ring (17) is already pressed gas-tightly against the outer peripheral surface (14) of the inserted end (11) of the gas pipe prior to the pressurised gas being let into the gas pipeline (11).

3. A process according to claim 1 or claim 2 characterised in that the medium which is forced in between the outer peripheral surface (24) of the sealing ring (17) which during the welding operation can be pressed against the outer peripheral surface (14) of the inserted end (11) of the gas pipe, and the bottom surface (25) of the annular groove (18), is provided with a pressure which is about 3 bars above the gas pressure obtaining in the gas pipe.

4. A process according to one of claims 1 to 3 characterised in that at its two ends the sealing ring (17) is provided with peripherally extending sealing lips (19, 20) which bear against the side surfaces (21) of the annular groove (18).

5. A process according to claim 4 characterised in that two sealing lips (19, 20) are provided on each end face of the sealing ring.

6. A process according to claim 4 or claim 5 characterised in that the radially inward peripheral surface (22) of the sealing ring (17) is of a convexly or concavely curved configuration.

7. A process according to one of claims 4 to 6 characterised in that the sealing ring is arranged in the region of an annular bead (35) on the connecting sleeve (10).

## Revendications

1. Procédé pour assembler, à l'aide d'un manchon (10) soudable, des bouts de tuyau (11) d'une conduite de gaz déjà utilisée, consistant à enfiler le manchon (10) sur les bouts de tuyau à gaz (11) à assembler et, la conduite de gaz étant sous pression, à assembler de chaque côté, de façon étanche aux gaz et par un cordon de soudure (13) qui en fait le tour, l'extrémité frontale (12) du manchon sur la surface extérieure (14) du bout de tuyau à gaz (11) enfilé, tandis que, de chaque côté et à l'aide d'une garniture (17), on réalise l'étanchéité de la fente annulaire (15) située entre la surface intérieure (16) du manchon d'assemblage (10) et la surface extérieure (14) du bout de tuyau à gaz (11) enfilé, la garniture (17) étant, d'une part, formée d'un anneau d'étanchéité (17) qui est en un matériau élastique souple, tel que caoutchouc, matiére plastique ou analogue, et qui, avant qu'on enfile le manchon d'assemblage (10) sur les bouts de tuyau à gaz (11) à assembler, peut se loger de façon étanche dans une gorge annulaire (18) ménagée dans la surface intérieure (16) du manchon d'assemblage (10), et étant, d'autre part, appliquée sous l'influence d'un effort sur la surface extérieure (14) du bout de tuyau à gaz (11) enfilé, caractérisé en ce que, pendant l'opération de soudage, un fluide, qui peut être introduit sous pression entre la surface extérieure (24) de l'anneau d'étanchéité (17) et la surface de fond (25) de la gorge annulaire (18) prévue dans la surface intérieure (16) du manchon d'assemblage (10), est utilisé pour appliquer radialement et de façon étanche aux gaz, contre la surface extérieure (14) du bout de tuyau à gaz (11) enfilé, l'anneau d'étanchéité (17) qui posséde un diamétre intérieur supérieur au diamétre extérieure du bout de tuyau à gaz (11) enfilé.

2. Procédé suivant la revendication 1, caractérisé en ce que, déjà avant qu'on admette dans la conduite de gaz (11) le gaz qui se trouve sous pression, on applique de façon étanche l'anneau d'étanchéité (17) sur la surface extérieure (14) du bout de tuyau à gaz (11) enfilé.

3. Procédé suivant l'une des revendications 1 et 2, caractérisé en ce qu'on attribue une pression qui est supérieure d'environ 3 bars à la pression de gaz régnant dans la conduite de gaz, au fluide introduit sous pression entre la surface cylindrique extérieure (24) de l'anneau d'étanchéité (17), qui peut être appliqué pendant l'opération de soudage sur la surface cylindrique extérieure (14) du bout de tuyau à gaz (11) enfilé, et la surface de fond (25) de la gorge annulaire (18).

4. Procédé suivant l'une des revendications 1 à 3, caractérisé en ce que, sur ses deux faces frontales, l'anneau d'étanchéité (17) est pourvu de lévres d'étanchéité annulaires (19, 20) qui s'appuient sur les surfaces latérales (21) de la gorge annulaire (18).

5. Procédé suivant la revendication 4, caractérisé en ce qu'il est prévu deux lévres d'étanchéité (19, 20) sur chacune des faces frontales de l'anneau d'étanchéité.

6. Procédé suivant l'une des revendications 4 et 5, caractérisé en ce que la surface radialement intérieure (22) de l'anneau d'étanchéité (17) posséde une courbure convexe ou concave.

7. Procédé suivant l'une des revendications 4 à 6, caractérisé en ce que l'anneau d'tanchéité est disposé dans la zone d'un bourrelet annulaire (35) du manchon d'assemblage (10).

FIG.1

FIG.2

FIG.3